# FASCICULE DE BREVET EUROPEEN

(11) **EP 3 491 707 B1**
(45) Date de publication et mention de la délivrance du brevet: **27.08.2025**
(21) Numéro de dépôt: 17745833.8
(22) Date de dépôt: 05.07.2017
(51) Int. Cl.: H02H 3/05, B60R 16/03, H02H 3/07, H02H 3/093

(54) **DISPOSITIF DE PROTECTION ET COMMUTATION ÉLECTRIQUE D'UN ÉQUIPEMENT ÉLECTRONIQUE, À CONTRÔLE DES ÉTATS DE MOYENS DE COMMUTATION**
VORRICHTUNG ZUM SCHUTZ UND ZUR ELEKTRISCHEN KOMMUTIERUNG EINES TEILS EINER ELEKTRONISCHEN AUSRÜSTUNG MIT STEUERUNG DER ZUSTÄNDE DER KOMMUTIERUNGSVORRICHTUNG
DEVICE FOR THE PROTECTION AND ELECTRICAL COMMUTATION OF A PIECE OF ELECTRONIC EQUIPMENT, WITH CONTROL OF THE STATES OF COMMUTATION MEANS

(30) Priorité: 28.07.2016 FR 1657299
(43) Date de publication de la demande: 05.06.2019
(73) Titulaire: Stellantis Auto SAS, 78300 Poissy (FR); Valeo Comfort and Driving Assistance, 94000 Créteil (FR)
(72) Inventeur: LEDEZ, Frederic, 78350 Jouy En Josas (FR); JACQUART, Francois, 75011 Paris (FR); KLEIN, Patrick, 94046 Creteil cedex (FR); MARANGE, Christophe, 94046 Creteil cedex (FR); HUE, Guillaume, 94046 Creteil cedex - France (FR)
(74) Mandataire: ESIP
(86) Numéro de dépôt international: PCT/FR2017/051827
(87) Numéro de publication internationale: WO 2018/020094

(56) Documents cités:
- EP-A1- 2 230 134
- EP-B1- 2 230 134
- US-A1- 2010 328 828

## Description

L'invention concerne les équipements électroniques qui sont propres à alimenter en courant au moins une charge commandée (ou pilotée), et plus précisément les dispositifs de protection et commutation qui équipent certains de ces équipements électroniques.

Dans certains domaines, comme par exemple celui des véhicules (éventuellement de type automobile), certains équipements électroniques, qui alimentent en courant, de façon commandée, au moins une charge commandée (ou pilotée), doivent se protéger contre les courants anormaux induits par cette charge ou par ses lignes de connexion électrique.

On entend ici par « courant anormal » un courant de surcharge ou un courant de court-circuit (franc ou impédant) ou encore un courant résultant d'une mauvaise utilisation ou d'une défaillance d'une charge commandée (ou pilotée) ou de l'utilisation d'une charge inadaptée.

Cette protection peut, par exemple, se faire au moyen d'un dispositif de protection et commutation installé sur la sortie d'alimentation de l'équipement électronique.

Un tel dispositif de protection et commutation comprend généralement des moyens de commutation qui sont propres à être placés dans un premier état dans lequel ils permettent l'alimentation en courant de la charge commandée associée ou dans un second état dans lequel ils interdisent l'alimentation en courant de la charge commandée associée, en fonction de la commande qu'ils reçoivent.

Ces moyens de commutation comprennent généralement au moins un composant électronique de puissance « intelligent » (parfois appelé « Smart-Power ») qui, hélas, n'a pas une durée de vie très longue lorsqu'il est placé dans des conditions d'utilisation anormales, c'est-à-dire faisant l'objet de surcharges électriques pendant des durées relativement longues. Cela résulte principalement du fait qu'un phénomène de fatigue, induit par les longues surcharges, apparait progressivement dans ces composants électroniques de puissance intelligents, et finit par les rendre inopérants, ce qui empêche alors la charge commandée d'assurer sa (ses) fonction(s) y compris lorsque la cause de la surcharge a disparu.

Afin d'éviter que le composant électronique de puissance intelligent devienne inopérant trop rapidement, il est possible de lui adjoindre une fonction de diagnostic intégrée et destinée à le placer temporairement dans son second état (non passant) dès qu'une surcharge est détectée. Le replacement dans le premier état (passant) peut ensuite se faire soit automatiquement à réception d'une commande externe ou après un délai prédéfini, soit consécutivement à une intervention manuelle externe (par l'usager ou un technicien dans un service après-vente). Cela permet certes de prolonger la durée de vie du dispositif de protection et commutation, mais à chaque fois que le composant électronique de puissance intelligent est placé dans son second état (non passant), la charge commandée ne peut plus assurer sa (ses) fonction(s) y compris en l'absence de surcharge.

Le document EP 2 230 134 décrit un dispositif pour commander un composant de commutation en activant un signal filaire de commande, le dispositif comprend un bloc recevant en entrées le signal filaire de commande et un signal d'autorisation. Le bloc est agencé pour produire en sortie un signal validé de commande qui est activé lorsque le signal filaire de commande est activé si le signal d'autorisation est activé, et qui est maintenu activé après activation tant que le signal filaire de commande est activé.

L'invention a donc notamment pour but d'améliorer la situation.

Elle propose à cet effet un dispositif de protection et commutation selon la revendication 1.

Ainsi, on peut concilier les objectifs de sécurité et de disponibilité de la fonction de l'équipement électronique lorsque la cause de la surcharge a disparu, même après une très longue période de fonctionnement en condition de surcharge.

Le dispositif de protection et commutation selon l'invention peut comporter d'autres caractéristiques qui peuvent être prises séparément ou en combinaison, et notamment :
- ses moyens de contrôle peuvent être propres à générer une commande propre à placer, de façon durable mais réversible de façon automatique, les moyens de commutation dans le second état en cas de confirmation d'un courant anormal, et à générer une commande propre à replacer les moyens de commutation dans le premier état en cas de réception d'un premier signal prédéfini externe à l'équipement électronique ;
- en variante, ses moyens de contrôle peuvent être propres à générer une commande propre à placer, de façon durable mais réversible de façon automatique, les moyens de commutation dans le second état lorsque la valeur déterminée est supérieure à un deuxième seuil strictement inférieur au premier seuil, et à générer une commande propre à replacer les moyens de commutation dans le premier état en cas de réception d'un premier signal prédéfini externe à l'équipement électronique ;
   ➢ ses moyens de contrôle peuvent être propres à générer une commande propre à replacer les moyens de commutation dans le premier état une unique fois en l'absence de réception du premier signal mais en cas de réception d'un deuxième signal prédéfini externe à l'équipement électronique ;
   ➢ ses moyens de contrôle peuvent être propres à générer une commande propre à placer, de façon durable mais réversible de façon non automatique, les moyens de commutation dans le second état lorsque la valeur déterminée est supérieure à un troisième seuil compris entre les premier et deuxième seuils, et à générer une commande propre à replacer les moyens de commutation dans le premier état en cas de réception d'un troisième signal prédéfini externe à l'équipement électronique ;
   ➢ ses moyens de contrôle peuvent être propres à comptabiliser une anomalie lorsque des signaux d'alerte sont générés de façon continue par les moyens de commutation pendant une première durée choisie, puis, en cas de comptabilisation d'une anomalie, à générer une commande propre à placer temporairement les moyens de commutation dans le second état pendant une deuxième durée choisie, et à générer une nouvelle commande propre à replacer les moyens de commutation dans le premier état à l'expiration de la deuxième durée ;
      - ses moyens de contrôle peuvent être propres à comptabiliser une anomalie lorsque les signaux d'alerte sont générés de façon continue par les moyens de commutation pendant une première durée choisie qui fait suite à une durée tampon prédéfinie pendant laquelle les moyens de commutation génèrent déjà des signaux d'alerte.

L'invention propose également un équipement électronique, propre à alimenter en courant au moins une charge commandée, et comprenant un dispositif de protection et commutation du type de celui présenté ci-avant.

L'invention propose également un véhicule, éventuellement de type automobile, et comprenant au moins un équipement électronique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un équipement électronique connecté à un moyen d'alimentation et comprenant un exemple de réalisation d'un dispositif de protection et commutation selon l'invention, et
- la figure 2 illustre schématiquement au sein d'un diagramme un exemple d'évolution temporelle de l'état dans lequel sont placés les moyens de commutation d'un dispositif de protection et commutation selon l'invention en présence de courants anormaux et d'un filtrage des signaux d'alerte destiné à déterminer les anomalies qui peuvent être comptabilisées.

L'invention a notamment pour but de proposer un dispositif de protection et commutation DP destiné à équiper un équipement électronique EE propre à alimenter en courant au moins une charge commandée CC.

Dans ce qui suit, on considère, à titre d'exemple non limitatif, que l'équipement électronique EE est un calculateur assurant au moins une fonction lorsqu'il est alimenté en courant. Mais l'invention n'est pas limitée à ce type d'équipement électronique. Elle concerne en effet tout type d'équipement électronique devant alimenter en courant au moins une charge commandée (ou pilotée) tout en se protégeant contre les courants anormaux induits par cette charge ou ses lignes de connexion électrique.

Il est rappelé que l'on entend ici par « courant anormal » un courant de surcharge ou un courant de court-circuit (franc ou impédant) ou encore un courant résultant d'une mauvaise utilisation ou d'une défaillance d'une charge commandée (ou pilotée) CC ou de l'utilisation d'une charge inadaptée.

Par ailleurs, on considère dans ce qui suit, à titre d'exemple non limitatif, que l'équipement électronique EE fait partie d'un véhicule, éventuellement de type automobile (comme par exemple une voiture). Mais l'invention n'est pas limitée à cette application. En effet, un équipement électronique EE peut être externe à un système ou bien peut faire partie de n'importe quel système disposant de moyens d'alimentation, et notamment d'un véhicule (terrestre, maritime (ou fluvial), ou aérien), d'un appareil électroménager, d'un appareil électronique grand public ou professionnel, d'un bâtiment, ou d'une installation, éventuellement de type industriel.

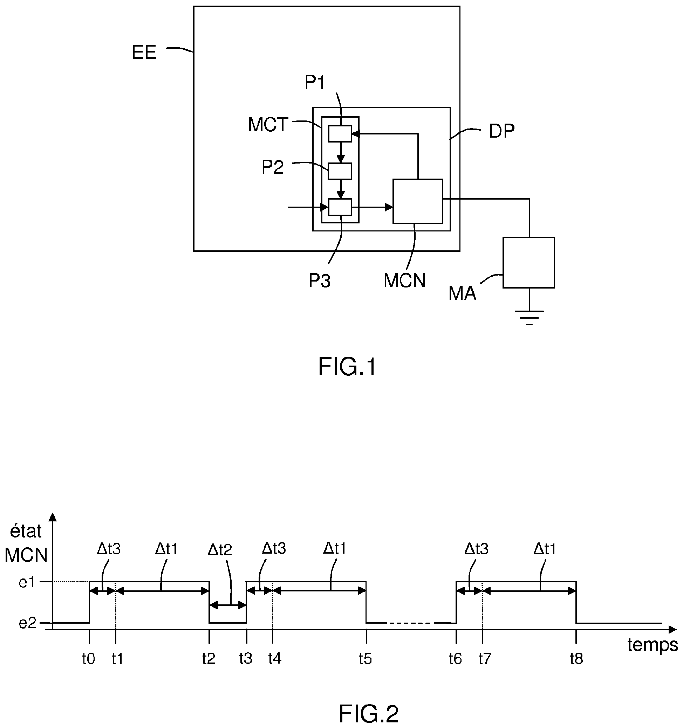

On a schématiquement représenté sur la figure 1 un exemple d'équipement électronique EE connecté à une charge commandée (ou pilotée) CC et comprenant un exemple de réalisation d'un dispositif de protection et commutation DP selon l'invention.

La charge commandée (ou pilotée) CC est alimentée en courant par l'équipement électronique EE via le dispositif de protection et commutation DP qui est installé sur sa sortie d'alimentation. Il s'agit, par exemple, d'un moteur électrique, ou d'un dispositif d'éclairage interne ou externe d'un véhicule, ou de toute autre charge ou actionneur électrique.

On notera que l'équipement électronique EE pourrait alimenter plusieurs (au moins deux) charges commandées (ou pilotées) CC.

Comme illustré non limitativement sur la figure 1, un dispositif de protection et commutation DP, selon l'invention, comprend au moins des moyens de commutation MCN et des moyens de contrôle MCT.

Les moyens de commutation MCN sont notamment propres à être placés dans un premier état (passant) e1 dans lequel ils permettent l'alimentation en courant de la charge commandée CC ou dans un second état (non passant) e2 dans lequel ils interdisent l'alimentation en courant de la charge commandée CC, en fonction d'une commande c0 qu'ils reçoivent. Lorsque l'équipement électronique EE fait partie d'un système (ici un véhicule), son dispositif de protection et commutation DP reçoit cette dernière commande c0 du système, par exemple via un réseau de communication embarqué. On notera que cette commande c0 peut être fournie par un usager du système ou par un autre équipement (ou organe) électronique faisant partie du système. Par ailleurs, cette commande c0 peut être analogique ou numérique.

Ces moyens de commutation MCN sont également propres à délivrer un signal d'alerte sa en cas de détection d'un courant anormal induit par la charge commandée CC.

Par exemple, les moyens de commutation MCN peuvent comprendre généralement au moins un composant électronique de puissance « intelligent », programmé pour délivrer un signal d'alerte sa chaque fois qu'il détecte un courant anormal induit par la charge commandée CC.

Les moyens de contrôle MCT sont propres à déterminer une valeur vp d'un paramètre, qui est représentatif d'une perte de fiabilité des moyens de commutation MCN induite par des courants anormaux, en fonction des signaux d'alerte sa délivrés, et à générer une commande c1 qui est propre à placer de façon définitive les moyens de commutation MCN dans le second état (non passant) e2 lorsque cette valeur déterminée vp est supérieure à un premier seuil s1.

Dans ce qui suit la commande c1 est appelée, à titre d'exemple, « commande d'inhibition définitive ». Elle peut être analogique ou numérique.

Chaque fois que les moyens de commutation MCN sont soumis à un courant anormal pendant une durée relativement longue, ils font l'objet d'une espèce de « stress » qui les fatigue et donc induit une perte de fiabilité. Les moyens de contrôle MCT permettent donc de laisser les moyens de commutation MCN fonctionner normalement tant qu'ils estiment que ces derniers (MCN) demeurent suffisamment fiables pour continuer de fonctionner normalement sans risque de défaillance, c'est-à-dire tant que la valeur déterminée vp est inférieure au premier seuil s1.

Ce premier seuil s1 peut, par exemple, être prédéfini en fonction d'informations de fiabilité en surcharge du composant électronique de puissance intelligent.

Par exemple, les moyens de contrôle MCT peuvent être propres à générer une commande c2 qui est propre à placer, de façon durable mais réversible de façon automatique, les moyens de commutation MCN dans le second état (non passant) e2 en cas de confirmation d'un courant anormal (ou défaut), comme illustré dans la figure 2). En variante, les moyens de contrôle MCT peuvent être propres à générer une commande c2 qui est propre à placer, de façon durable mais réversible de façon automatique, les moyens de commutation MCN dans le second état (non passant) e2 lorsque la valeur déterminée vp est supérieure à un deuxième seuil s2 strictement inférieur au premier seuil s1. Dans ces cas, les moyens de contrôle MCT sont propres à générer une commande c3 qui est propre à replacer les moyens de commutation MCN dans le premier état e1 en cas de réception d'un premier signal ps prédéfini externe à l'équipement électronique EE.

Dans ce qui suit la commande c2 est appelée, à titre d'exemple, « commande d'inhibition ré-enclenchable ». Elle peut être analogique ou numérique. De même le premier signal ps peut être analogique ou numérique.

Par exemple, le premier signal ps peut être transmis par le système (ici un véhicule) après qu'un événement soit arrivé en son sein, comme par exemple une mise en veille ou un réveil de l'équipement électronique EE, ou la réception d'une nouvelle commande c0, ou la coupure ou la mise du contact du véhicule. Il est important de noter que ce premier signal ps ne résulte pas d'une opération spécifique et dédiée au ré-enclenchement de la part d'un usager du véhicule ou d'un technicien dans un service après-vente (le ré-enclenchement est en effet automatique).

On notera que les moyens de contrôle MCT peuvent être également propres à générer une commande c3 qui est propre à replacer les moyens de commutation MCN dans le premier état e1 une unique fois en l'absence de réception du premier signal ps mais en cas de réception d'un deuxième signal ds prédéfini externe à l'équipement électronique EE.

Dans ce qui suit la commande c3 est appelée, à titre d'exemple, « commande de désinhibition unique ». Elle peut être analogique ou numérique. De même le deuxième signal ps peut être analogique ou numérique.

On comprendra qu'en présence de cette dernière option, si le courant anormal persiste ou revient après l'envoi de la commande de désinhibition unique c3 (et donc de replacement des moyens de commutation MCN dans le premier état e1), les moyens de contrôle MCT génèrent de nouveau une commande d'inhibition ré-enclenchable c2 qui place les moyens de commutation MCN dans le second état e2 (dans l'attente de réception d'un premier signal ps).

En revanche, si le courant anormal a disparu après l'envoi de la commande de désinhibition unique c3 (et donc après le replacement des moyens de commutation MCN dans le premier état e1), les moyens de contrôle MCT laissent ces derniers (MCN) dans leur premier état e1 (dans lequel ils sont disponibles pour alimenter la charge commutée CC).

Par exemple, le deuxième signal ds peut être transmis par le système (ici un véhicule) après que le conducteur ait mis ou remis le contact (sans nécessairement démarrer le véhicule) ou ait réactivé une commande (par exemple : demande d'extinction, puis de ré-allumage des phares).

On notera également que les moyens de contrôle MCT peuvent être également propres à générer une commande c4 qui est propre à placer, de façon durable mais réversible de façon non automatique, les moyens de commutation MCN dans le second état e2 lorsque la valeur déterminée vp est supérieure à un troisième seuil s3 compris entre les premier s1 et deuxième s2 seuils (soit s2 < s3 < s1). Dans ce cas, les moyens de contrôle MCT sont propres à générer une commande c5 qui est propre à replacer les moyens de commutation MCN dans le premier état e1 en cas de réception d'un troisième signal ts prédéfini externe à l'équipement électronique EE, après le dépassement du troisième seuil s3 et avant que le premier seuil s1 ait été atteint. On peut envisager d'utiliser plusieurs troisièmes seuils s3 associés à la commande c4.

Dans ce qui suit la commande c4 est appelée, à titre d'exemple, « commande d'inhibition réarmable ». Elle peut être analogique ou numérique. De même la commande c5 peut être analogique ou numérique. Egalement de même le troisième signal ts peut être analogique ou numérique.

Par exemple, le troisième signal ts peut être transmis par le système (ici un véhicule) après qu'un usager du véhicule ou un technicien d'un service après-vente ait effectué une opération spécifique dédiée au réarmement et donc non automatique. Une telle opération spécifique peut, par exemple, consister en un débranchement de la batterie du véhicule, ou la fourniture d'une séquence spécifique de commandes, ou l'actionnement d'un organe de commande dédié, ou encore une intervention particulière dans un service après-vente.

On comprendra qu'en présence de cette dernière option, si la surcharge persiste ou revient après l'envoi de la commande de réarmement c5 (et donc le replacement des moyens de commutation MCN dans le premier état e1), les moyens de contrôle MCT génèrent de nouveau une commande d'inhibition réarmable c4 qui place les moyens de commutation MCN dans le second état e2 (dans l'attente de réception d'un nouveau troisième signal ts). Cette procédure se reproduit alors tant que le premier seuil s1 n'a pas été atteint.

On notera qu'en présence des deux options précédentes permettant aux moyens de contrôle MCT de générer une commande de désinhibition uniquec3 ou une commande d'inhibition réarmable c4, il peut arriver qu'après la génération d'une commande de désinhibition unique c3 le courant anormal soit toujours présent. Dans ce cas, soit la valeur vp a dépassé le premier seuil s1 et donc les moyens de contrôle MCT génèrent une commande d'inhibition définitive c1 propre à placer de façon définitive les moyens de commutation MCN dans le second état e2, soit la valeur vp est désormais comprise entre le troisième seuil s3 et le premier seuil s1 et donc les moyens de contrôle MCT génèrent une commande d'inhibition réarmable c4 qui est propre à placer, de façon durable mais réversible de façon non automatique, les moyens de commutation MCN dans le second état e2.

Afin de déterminer la valeur vp plusieurs méthodes peuvent être mises en œuvre. L'une de ces méthodes est décrite ci-après à titre d'exemple illustratif.

Par exemple, les moyens de contrôle MCT peuvent être propres à comptabiliser une anomalie lorsque les signaux d'alerte sa délivrés vérifient au moins un critère, et à déterminer la valeur de paramètre vp en fonction au moins du nombre d'anomalies comptabilisées.

Plusieurs méthodes de comptabilisation peuvent être mises en œuvre. L'une de ces méthodes est décrite ci-après à titre d'exemple non limitatif en référence, partiellement, à la figure 2 qui illustre un exemple d'évolution temporelle de l'état dans lequel sont placés les moyens de commutation MCN du dispositif de protection et commutation DP en présence de courants anormaux et d'un filtrage des signaux d'alerte destiné à déterminer les anomalies qui peuvent être comptabilisées.

Par exemple, les moyens de contrôle MCT peuvent être propres à comptabiliser une anomalie lorsque des signaux d'alerte sa sont générés de façon continue par les moyens de commutation MCN pendant une première durée Δt1 choisie. En d'autres termes, les moyens de contrôle MCT filtrent les signaux d'alerte sa et valident (ou comptabilisent) une anomalie lorsque les moyens de commutation MCN génèrent des signaux d'alerte sa de façon continue pendant une première durée Δt1 choisie. On comprendra que la génération des signaux d'alerte sa de façon continue pendant la première durée Δt1 constitue un critère.

En cas de comptabilisation d'une anomalie, les moyens de contrôle MCT génèrent une commande c5 qui est propre à placer temporairement les moyens de commutation MCN dans le second état e2 pendant une deuxième durée Δt2 choisie, et génèrent une nouvelle commande c6 propre à replacer les moyens de commutation MCN dans le premier état e1 à l'expiration de la deuxième durée Δt2.

La première durée Δt1 est choisie en fonction des composants qui constituent les moyens de contrôle MCT. Elle est représentative de la durée minimale pendant laquelle les moyens de contrôle MCT doivent être soumis à un courant anormal pour que cela induise, statistiquement, une fatigue (ou un stress). Par exemple, cette première durée Δt1 peut être comprise entre 10 ms et 300 ms.

Le placement temporaire des moyens de commutation MCN dans le second état e2 pendant la deuxième durée Δt2 est destiné, d'une part, à laisser du temps à la charge commandée CC pour qu'elle n'induise plus de courant anormal, et, d'autre part, à permettre aux moyens de commutation MCN de récupérer de la fatigue (ou du stress) subi(e).

La deuxième durée Δt2 peut être choisie en fonction du moyen d'alimentation MA et/ou des composants qui constituent les moyens de contrôle MCT. Par exemple, cette deuxième durée Δt2 peut être comprise entre 500 ms et 1000 ms.

La commande c6 peut être analogique ou numérique.

On comprendra, comme illustré, qu'à l'expiration de la deuxième durée Δt2 si l'un des seuils s1 à s3 n'a pas été atteint, les moyens de contrôle MCT génèrent une commande qui place les moyens de commutation MCN dans le premier état (passant) e1. Puis, si le courant anormal persiste ou est revenu à l'expiration de cette deuxième durée Δt2, les moyens de contrôle MCT recommencent leur observation (ou filtrage) des éventuels signaux d'alerte sa délivrés par les moyens de commutation MCN. Par conséquent, si des signaux d'alerte sa sont de nouveau délivrés de façon continue par les moyens de commutation MCN pendant une nouvelle première durée Δt1, les moyens de contrôle MCT vont de nouveau comptabiliser une anomalie, et donc vont générer une nouvelle commande c5 propre à placer de nouveau temporairement les moyens de commutation MCN dans le second état e2 pendant une nouvelle deuxième durée Δt2. Et ainsi de suite tant que l'un des seuils s1 à s3 n'a pas été atteint.

Par exemple et comme illustré non limitativement sur la figure 2, les moyens de contrôle MCT peuvent être propres à comptabiliser une anomalie lorsque des signaux d'alerte sa sont générés de façon continue par les moyens de commutation MCN pendant une première durée Δt1 qui fait suite à une durée tampon Δt3 prédéfinie pendant laquelle les moyens de commutation MCN génèrent déjà des signaux d'alerte sa.

Cette durée tampon (ou d'exclusion) Δt3 est une durée pendant laquelle on considère que chaque signal d'alerte sa n'est pas « fiable », c'est-à-dire propre à être pris en compte.

Dans l'exemple de la figure 2, juste avant un instant t0 les moyens de contrôle MCT reçoivent une commande c0 requérant le placement des moyens de commutation MCN dans leur premier état e1. A cet instant t0 les moyens de contrôle MCT exécutent cette requête et commencent à observer les signaux d'alerte sa délivrés. On considère ici qu'un signal d'alerte sa est effectivement délivré à l'instant t0 et donc les moyens de contrôle MCT déclenchent à l'instant t0 une temporisation d'une durée tampon Δt3. Ici, à l'expiration de la durée tampon Δt3 (instant t1), un signal d'alerte sa est toujours délivré. Par conséquent, les moyens de contrôle MCT déclenchent à l'instant t1 une autre temporisation d'une première durée Δt1. Ici, à l'expiration de la première durée Δt1 (instant t2) les moyens de contrôle MCT constatent avec leur fonction de filtrage qu'un signal d'alerte sa est toujours délivré, mais qu'aucun des seuils s1 à s3 n'a été atteint. Par conséquent, ils comptabilisent (ou valident) une anomalie, et à l'instant t2 les moyens de contrôle MCT génèrent une commande c5 propre à placer temporairement les moyens de commutation MCN dans le second état e2 pendant une deuxième durée Δt2. Puis, à l'expiration de la deuxième durée Δt2 (instant t3), les moyens de contrôle MCT génèrent une commande c6 propre à replacer les moyens de commutation MCN dans le premier état e1.

On considère ensuite qu'à l'instant t3 un signal d'alerte sa est effectivement délivré et donc les moyens de contrôle MCT déclenchent à cet instant t3 une nouvelle temporisation d'une durée tampon Δt3. Ici, à l'expiration de cette nouvelle durée tampon Δt3 (instant t4), un signal d'alerte sa est toujours délivré. Par conséquent, les moyens de contrôle MCT déclenchent à l'instant t4 une autre temporisation d'une première durée Δt1. Ici, à l'expiration de la nouvelle première durée Δt1 (instant t5) les moyens de contrôle MCT constatent avec leur fonction de filtrage qu'un signal d'alerte sa est toujours délivré, mais qu'aucun des seuils s1 à s3 n'a été atteint. Par conséquent, ils comptabilisent (ou valident) une anomalie, et génèrent à l'instant t5 une nouvelle commande c5 propre à placer temporairement les moyens de commutation MCN dans le second état e2 pendant une nouvelle deuxième durée Δt2. Puis, à l'expiration de cette nouvelle deuxième durée Δt2 (non représenté), les moyens de contrôle MCT peuvent générer une commande c6 propre à replacer les moyens de commutation MCN dans le premier état e1, et ainsi de suite.

On considère ensuite qu'à l'instant t6 les moyens de commutation MCN ont été de nouveau replacés dans le premier état e1 et qu'un signal d'alerte sa est effectivement délivré. Par conséquent, les moyens de contrôle MCT déclenchent à cet instant t6 une nouvelle temporisation d'une durée tampon Δt3. Ici, à l'expiration de cette nouvelle durée tampon Δt3 (instant t7), un signal d'alerte sa est toujours délivré. Par conséquent, les moyens de contrôle MCT déclenchent à l'instant t7 une autre temporisation d'une première durée Δt1. Ici, à l'expiration de la nouvelle première durée Δt1 (instant t8) les moyens de contrôle MCT constatent avec leur fonction de filtrage qu'un signal d'alerte sa est toujours délivré, mais que l'un des seuils, par exemple s2, a été atteint. Par conséquent, ils comptabilisent (ou valident) une anomalie, et génèrent à l'instant t8 une commande d'inhibition ré-enclenchable c2 propre à placer, de façon durable mais réversible de façon automatique, les moyens de commutation MCN dans le second état e2. Puis, les moyens de contrôle MCT attendent de recevoir une nouvelle commande c0 (destinée à replacer les moyens de commutation MCN dans le premier état e1) ou bien un premier signal ps (destiné à replacer les moyens de commutation MCN dans le premier état e1).

On notera que le dispositif de protection et commutation DP peut, éventuellement, informer l'équipement électronique EE de l'état d'inhibition de l'alimentation électrique (disponible / inhibée temporairement / inhibée définitivement) ainsi qu'éventuellement d'un niveau de disponibilité des moyens de commutation MCN. Ce niveau peut, par exemple être un pourcentage (100% correspondant à un état neuf des moyens de commutation MCN et 0% correspondant à un arrêt de fonctionnement définitif des moyens de commutation MCN (caractérisé par une inhibition définitive)).

Comme illustré non limitativement sur la figure 1, les moyens de contrôle MCT peuvent être éventuellement agencés en trois parties :
- une première partie P1 dédiée à l'observation des signaux d'alerte sa délivrés par les moyens de commutation MCN afin de déterminer chaque signal d'alerte sa pouvant être comptabilisé,
- une deuxième partie P2 chargée de filtrer les signaux d'alerte sa afin de déterminer des anomalies à comptabiliser (ou valider), et d'incrémenter d'une unité la valeur vp chaque fois qu'une anomalie a été déterminée afin de déterminer quand cette valeur vp dépasse l'un des seuils s1 à s3, et
- une troisième partie P3 recevant chaque commande externe c0 et chaque signal ps, ds ou ts, et chargée de générer les différentes commandes destinées à contrôler le placement des moyens de commutation MCN dans leur premier e1 ou second e2 état.

Par ailleurs, ces moyens de contrôle MCT peuvent être réalisés sous la forme de modules logiciels (ou informatiques ou encore « software »), ou bien d'une combinaison de circuits électroniques (ou « hardware ») et de modules logiciels.

Le dispositif de protection et commutation DP supporte trois types d'exigence :
- une exigence de sécurité grâce à l'inhibition définitive de l'alimentation électrique de l'équipement électronique EE dès que l'on considère que les moyens de commutation MCN ne sont plus suffisamment fiables,
- une exigence de disponibilité permettant à l'équipement électronique EE de continuer d'assurer sa mission en présence d'un courant anormal, grâce à un évitement d'un arrêt intempestif de l'alimentation électrique de l'équipement électronique EE tant que le courant anormal n'a pas été confirmé, par exemple par comptabilisation,
- une exigence de disponibilité permettant à l'équipement électronique EE d'être réalimenté électriquement de façon automatique après une inhibition ré-enclenchable de ses moyens de commutation MCN destinée à accroître leur durée de fonctionnement en présence d'un courant anormal.

L'invention permet donc de concilier les objectifs de sécurité (risque de défaillance de l'équipement électronique) et de disponibilité de la fonction de l'équipement électronique lorsque la cause du courant anormal a disparu, même après une très longue période de fonctionnement en présence d'un courant anormal. En outre, l'invention n'induit pas une augmentation notable du coût de l'équipement électronique car le dispositif de protection et commutation peut être agencé sous la forme de modules logiciels implantés dans l'équipement électronique. De plus, l'invention ne nécessite pas d'intervention spécifique, par exemple dans un service après-vente, après disparition du courant anormal, tant que la valeur du paramètre représentatif d'une perte de fiabilité des moyens de commutation demeure inférieure au premier seuil s1 ou à l'éventuel troisième seuil s3.

## Revendications

1. Dispositif de protection et commutation (DP) pour un équipement électronique (EE) propre à alimenter en courant au moins une charge commandée (CC), ledit dispositif (DP) comprenant des moyens de commutation (MCN) propres à être placés dans l'un de premier et second états, dans lesquels respectivement ils permettent et interdisent l'alimentation en courant de ladite charge commandée (CC), en fonction d'une commande, **caractérisé en ce que** lesdits moyens de commutation (MCN) sont propres à délivrer un signal d'alerte en cas de détection d'un courant anormal induit par ladite charge commandée (CC), et **en ce qu'**il comprend en outre des moyens de contrôle (MCT) propres à déterminer une valeur d'un paramètre, représentatif d'une perte de fiabilité desdits moyens de commutation (MCN) induite par des courants anormaux, en fonction desdits signaux d'alerte délivrés, et à générer une commande propre à placer de façon définitive lesdits moyens de commutation (MCN) dans ledit second état lorsque ladite valeur déterminée est supérieure à un premier seuil, et
dans lequel lesdits moyens de contrôle (MCT) sont propres à comptabiliser une anomalie lorsque lesdits signaux d'alerte délivrés vérifient au moins un critère déterminé, et à déterminer ladite valeur du paramètre en fonction au moins du nombre d'anomalies comptabilisées.

2. Dispositif selon la revendication 1, **caractérisé en ce que** lesdits moyens de contrôle (MCT) sont propres à générer une commande propre à placer, de façon durable mais réversible de façon automatique, lesdits moyens de commutation (MCN) dans ledit second état en cas de confirmation d'un courant anormal, et à générer une commande propre à replacer lesdits moyens de commutation (MCN) dans ledit premier état en cas de réception d'un premier signal prédéfini externe audit équipement électronique (EE).

3. Dispositif selon la revendication 1, **caractérisé en ce que** lesdits moyens de contrôle (MCT) sont propres à générer une commande propre à placer, de façon durable mais réversible de façon automatique, lesdits moyens de commutation (MCN) dans ledit second état lorsque ladite valeur déterminée est supérieure à un deuxième seuil strictement inférieur audit premier seuil, et à générer une commande propre à replacer lesdits moyens de commutation (MCN) dans ledit premier état en cas de réception d'un premier signal prédéfini externe audit équipement électronique (EE).

4. Dispositif selon l'une des revendications 2 et 3, **caractérisé en ce que** lesdits moyens de contrôle (MCT) sont propres à générer une commande propre à replacer lesdits moyens de commutation (MCN) dans ledit premier état une unique fois en l'absence de réception dudit premier signal mais en cas de réception d'un deuxième signal prédéfini externe audit équipement électronique (EE).

5. Dispositif selon l'une des revendications 3 et 4, **caractérisé en ce que** lesdits moyens de contrôle (MCT) sont propres à générer une commande propre à placer, de façon durable mais réversible de façon non automatique, lesdits moyens de commutation (MCN) dans ledit second état lorsque ladite valeur déterminée est supérieure à un troisième seuil compris entre lesdits premier et deuxième seuils, et à générer une commande propre à replacer lesdits moyens de commutation (MCN) dans ledit premier état en cas de réception d'un troisième signal prédéfini externe audit équipement électronique (EE).

6. Dispositif selon l'une des revendications précédentes, **caractérisé en ce que** lesdits moyens de contrôle (MCT) sont propres à comptabiliser une anomalie lorsque des signaux d'alerte sont générés de façon continue par lesdits moyens de commutation (MCN) pendant une première durée choisie, puis, en cas de comptabilisation d'une anomalie, à générer une commande propre à placer temporairement lesdits moyens de commutation (MCN) dans ledit second état pendant une deuxième durée choisie, et à générer une nouvelle commande propre à replacer lesdits moyens de commutation (MCN) dans ledit premier état à l'expiration de ladite deuxième durée.

7. Dispositif selon la revendication 6, **caractérisé en ce que** lesdits moyens de contrôle (MCT) sont propres à comptabiliser une anomalie lorsque lesdits signaux d'alerte sont générés de façon continue par lesdits moyens de commutation (MCN) pendant ladite première durée choisie faisant suite à une durée tampon prédéfinie pendant laquelle lesdits moyens de commutation (MCN) génèrent déjà des signaux d'alerte.

8. Equipement électronique (EE) propre à alimenter en courant au moins une charge commandée (CC), **caractérisé en ce qu'**il comprend un dispositif de protection et commutation (DP) selon l'une des revendications précédentes.

9. Véhicule, **caractérisé en ce qu'**il comprend au moins un équipement électronique (EE) selon la revendication 8.

## Patentansprüche

1. Schutz- und Schaltvorrichtung (PD) für elektronische Geräte (EE), die in der Lage sind, mindestens eine geregelte Last (DC) mit Strom zu versorgen, wobei die Vorrichtung (PD) Schaltmittel (MCN) umfasst, die geeignet sind, in einen der ersten und zweiten Zustände versetzt zu werden, in denen sie die Stromversorgung der geregelten Last (DC) jeweils zulassen bzw. verbieten, in Übereinstimmung mit einer Steuerung, **dadurch gekennzeichnet, dass** die Schaltmittel (MCN) in der Lage sind, ein Alarmsignal im Falle der Detektion eines durch die geregelte Last (DC) induzierten anormalen Stroms abzugeben, und dass sie auch Steuermittel (MCT) umfassen, die in der Lage sind, einen Wert eines Parameters zu bestimmen, der für einen durch abnormale Ströme induzierten Verlust der Zuverlässigkeit des Schaltmittels (MCN) repräsentativ ist, auf der Grundlage der abgegebenen Alarmsignale und zur Erzeugung eines Befehls, der geeignet ist, das Schaltmittel (MCN) endgültig in den zweiten Zustand zu versetzen, wenn der ermittelte Wert größer als ein erster Schwellenwert ist, und
wobei die Kontrollmittel (MCT) geeignet sind, eine Anomalie zu zählen, wenn die ausgegebenen Warnsignale mindestens ein spezifisches Kriterium verifizieren, und den Wert des Parameters mindestens entsprechend der Anzahl der aufgezeichneten Anomalien zu bestimmen.

2. Vorrichtung nach Anspruch 1, **dadurch gekennzeichnet, dass** die Steuermittel (MCT) in der Lage sind, eine Steuerung zu erzeugen, die in der Lage ist, das Schaltmittel (MCN) in den zweiten Zustand zu versetzen, wenn ein abnormaler Strom bestätigt wird, und eine Steuerung zu erzeugen, die in der Lage ist, das Schaltmittel (MCN) im ersten Zustand zu ersetzen, wenn ein erstes vordefiniertes Signal außerhalb des Geräts empfangen wird Elektronisch (EE).

3. Vorrichtung nach Anspruch 1, **dadurch gekennzeichnet, dass** die Steuermittel (MCT) in der Lage sind, eine Steuerung zu erzeugen, die in der Lage ist, das Schaltmittel (MCN) in dauerhafter, aber reversibler Weise automatisch in den zweiten Zustand zu versetzen, wenn der ermittelte Wert größer als ein zweiter Schwellenwert ist, der streng unter dem ersten Schwellenwert liegt, und eine Steuerung zu erzeugen, die geeignet ist, das Schaltmittel (MCN) wieder in den ersten Zustand zu versetzen, wenn Empfang eines ersten vordefinierten Signals außerhalb des elektronischen Geräts (EE).

4. Vorrichtung nach einem der Ansprüche 2 und 3, **dadurch gekennzeichnet, dass** die Steuermittel (MCT) in der Lage sind, einen Befehl zu erzeugen, der geeignet ist, das Schaltmittel (MCN) im ersten Zustand nur einmal zu ersetzen, wenn das erste Signal nicht empfangen wird, sondern im Falle des Empfangs eines zweiten vordefinierten Signals außerhalb des elektronischen Geräts (EE).

5. Vorrichtung nach einem der Ansprüche 3 und 4, **dadurch gekennzeichnet, dass** die Steuermittel (MCT) in der Lage sind, eine Steuerung zu erzeugen, die in der Lage ist, das Schaltmittel (MCN) auf dauerhafte, aber reversible Weise auf nicht-automatische Weise in den zweiten Zustand zu versetzen, wenn der ermittelte Wert größer als ein dritter Schwellenwert zwischen dem ersten und dem zweiten Schwellenwert ist, und um einen Befehl zu erzeugen, der geeignet ist, das Schaltmittel (MCN) in den ersten Zustand zurückzuversetzen, wenn ein drittes vordefiniertes Signal außerhalb des elektronischen Geräts (EE) empfangen wird.

6. Vorrichtung nach einem der vorhergehenden Ansprüche, **dadurch gekennzeichnet, dass** die Steuermittel (MCT) in der Lage sind, eine Anomalie zu berücksichtigen, wenn Warnsignale kontinuierlich durch das Schaltmittel (MCN) während einer zuerst gewählten Dauer erzeugt werden, und dann, im Falle der Berücksichtigung einer Anomalie, einen Befehl zu erzeugen, der geeignet ist, das Schaltmittel (MCN) vorübergehend für eine zweite gewählte Dauer in den zweiten Zustand zu versetzen, und um einen neuen Befehl zu erzeugen, der geeignet ist, das Schaltmittel (MCN) in dem ersten Zustand nach Ablauf der zweiten Dauer zu ersetzen.

7. Vorrichtung nach Anspruch 6, **dadurch gekennzeichnet, dass** die Steuermittel (MCT) in der Lage sind, eine Anomalie zu erklären, wenn die Warnsignale kontinuierlich von dem Schaltmittel (MCN) während der ersten ausgewählten Dauer nach einer vordefinierten Pufferzeit erzeugt werden, während der das Schaltmittel (MCN) bereits Warnsignale erzeugt.

8. Elektronische Geräte (EE), geeignet zur Stromversorgung mindestens einer geregelten Last (CC), **dadurch gekennzeichnet, dass** sie eine Schutz- und Schalteinrichtung (DP) nach einem der vorhergehenden Ansprüche umfassen.

9. Fahrzeug, **dadurch gekennzeichnet, dass** es mindestens ein elektronisches Gerät (EE) nach Anspruch 8 umfasst.

## Claims

1. Protection and switching device (PD) for electronic equipment (EE) capable of supplying current to at least one controlled load (DC), said device (PD) comprising switching means (MCN) suitable for being placed in one of the first and second states, in which they respectively allow and prohibit the supply of current to said controlled load (DC), in accordance with a control, **characterised in that** the said switching means (MCN) are capable of delivering an alert signal in the event of the detection of an abnormal current induced by said controlled load (DC), and **in that** it also includes control means (MCT) capable of determining a value of a parameter, representative of a loss of reliability of said switching means (MCN) induced by abnormal currents, on the basis of said alert signals delivered, and to generate a command suitable for definitively placing said switching means (MCN) in said second state when said determined value is greater than a first threshold, and
wherein said means of control (MCT) are suitable for counting an anomaly when said warning signals issued verify at least one specific criterion, and for determining said value of the parameter according to at least the number of anomalies recorded.

2. Device according to claim 1, **characterized in that** said means of control (MCT) are capable of generating a control capable of placing said switching means (MCN) in the said second state in the event of confirmation of an abnormal current, and of generating a control capable of replacing said switching means (MCN) in said first state in the event of reception of a first predefined signal external to said equipment Electronic (EE).

3. Device according to claim 1, **characterized in that** said control means (MCT) are capable of generating a control capable of placing, in a durable but reversible manner automatically, said switching means (MCN) in said second state when said determined value is greater than a second threshold strictly below said first threshold, and of generating a control suitable for placing said switching means (MCN) back in said first state in the event of reception of a first predefined signal external to the said electronic equipment (EE).

4. Device according to one of claims 2 and 3, **characterized in that** said control means (MCT) are capable of generating a command suitable for replacing said switching means (MCN) in said first state only once in the absence of reception of said first signal but in the event of reception of a second predefined signal external to said electronic equipment (EE).

5. Device according to one of claims 3 and 4, **characterized in that** said control means (MCT) are capable of generating a control capable of placing, in a durable but reversible manner in a non-automatic manner, the said switching means (MCN) in said second state when said determined value is greater than a third threshold between said first and second thresholds, and to generate a command suitable for returning said switching means (MCN) to said first state in the event of reception of a third predefined signal external to said electronic equipment (EE).

6. Device according to one of the preceding claims, **characterized in that** said control means (MCT) are capable of accounting for an anomaly when warning signals are generated continuously by said switching means (MCN) during a first chosen duration, then, in the event of accounting for an anomaly, generating a command suitable for temporarily placing said switching means (MCN) in said second state for a second chosen duration, and to generate a new command suitable for replacing said switching means (MCN) in said first state at the expiration of said second duration.

7. A device according to claim 6, **characterized in that** said control means (MCT) are capable of accounting for an anomaly when said warning signals are continuously generated by said switching means (MCN) during said first selected duration following a predefined buffer time during which said switching means (MCN) already generate warning signals.

8. Electronic equipment (EE) suitable for supplying current to at least one controlled load (CC), **characterised in that** it comprises a protection and switching device (DP) according to one of the preceding claims.

9. A vehicle, **characterised in that** it comprises at least one piece of electronic equipment (EE) according to claim 8.
